# EUROPÄISCHE PATENTSCHRIFT

(11) **EP 1 100 139 B1**
(45) Veröffentlichungstag und Bekanntmachung des Hinweises auf die Patenterteilung: **09.12.2015**
(21) Anmeldenummer: 99811044.9
(22) Anmeldetag: 12.11.1999
(51) Int. Cl.: H01M 6/10, H01M 4/64

(54) **Gewickelte Batterie**
Wound battery
Batterie enroulée

(43) Veröffentlichungstag der Anmeldung: 16.05.2001
(73) Patentinhaber: Wyon AG, 9050 Appenzell Steinegg (CH)
(72) Erfinder: Wyser, Paul Julian, 9050 Appenzell (CH)
(74) Vertreter: Roshardt, Werner Alfred

(56) Entgegenhaltungen:
- DE-A- 2 137 753
- GB-A- 1 144 438
- US-A- 2 473 546

## Beschreibung

### Technisches Gebiet

Die Erfindung betrifft eine Batterie mit mindestens einem stiftförmigen Ableiter im inneren eines Wickels und einem am Ableiter mit einem Anschlußbereich angebrachten Ableiterband mit einer aktiven Oberflächenbeschichtung.

### Stand der Technik

Elektronische Geräte sind heutzutage allgegenwärtig. Sie kommen nicht aus ohne Batterien (seien es wiederaufladbare oder nicht). Namentlich bei mobilen und miniaturisierten Geräten, die auf Dauer vom Benutzer getragen werden (wie z.B. Hörgeräte, Herzschrittmacher, Insulinpumpen und portable oder implantierte Medikament-Dispenser), spielt die Grösse der Batterie im Verhältnis zur speicherbaren Energie eine zentrale Rolle. Bei vorgegebener Energie soll die Batterie möglichst klein sein.

Hohe Energiedichten lassen sich mit gewickelten Batterien erzielen, wie sie z.B. in der EP 0 144 757, der JP 57-163965 oder der US 5,556,722 beschrieben sind. In einem dichten Gehäuse ist ein Wickel ("jelly roll") mit einem aktiven Kathoden- und einem aktiven Anodenband untergebracht. Die gemeinsam spiralförmig aufgewickelten Bänder sind durch einen Separator elektrisch getrennt, wobei ein flüssiger Elektrolyt oder ein Polymer als lonenleiter dient. Elektrische Leiter verbinden die Bänder mit aussen am Gehäuse angeordneten Stromanschlüssen (Minus- und Pluspol der Batterie).

Die in den letzten Jahren entwickelten Li/Ion- und Li/Polymer-Batterien basieren auf der folgenden beispielhaften Reaktion (vgl. z.B. US 4,302,518):

Laden: LiMOₓ+Cₙ → Li_{1-y}MOₓ+Li_{y}Cₙ

Entladen: Li_{1-y}MOₓ+Li_{y}Cₙ → LiMOₓ+Cₙ

wobei M für Co, Mn oder Ni steht und C für Graphit oder Koks (Li = Lithium, 0 = Sauerstoff). "x" und "y" bezeichnen beliebige Zahlen zwischen 0 und 1.

Diese aktiven Materialien werden in der Regel auf metallische Ableiterfolien aus Aluminium für die Kathode (Co, Mn, Ni) und aus Kupfer für Anode (Graphit, Koks) aufgebracht. Dabei gilt es besonders zu beachten, daß beim Wickelprozeß und beim Befestigen der notwendigen Stromableiter keine nicht mit aktivem Material beschichtete "nackte" Kupferoberfläche direkt gegenüber dem aktiven Anodenmaterial zu liegen kommt. Es gilt nämlich zu verhindern, dass sich als Nebenreaktion metallisches Li beim Ladeprozess auf der "nackten" Anodenoberfläche aufbaut. Eine solche unerwünschte Ablagerung von metallischen Li hätte innere Kriechströme und bei größeren Ablagerungen einen elektrischen Kurzschluss zwischen Anode und Kathode zur Folge, da der eingesetzte Separator keine genügende elektrische Barriere darstellt.

Die US 2,473,546 offenbart eine Primärzelle mit einer verbesserten Lebensdauer. Die Zelle ist zylindrisch. Im Zentrum befindet sich ein Stahlstab, an welchem die eine der streifenförmigen Elektroden angeschweisst ist. Die mit einem Quecksilberoxid beschichtete Streifenelektrode wird zwei- oder dreimal eng um eine Stahlstange gewickelt. Danach wird ein Separator auf den noch nicht aufgewickelten Teil gelegt. Darauf folgen eine Zinkfolie und ein zweiter Separator. Das Ganze wird derart eingerollt, dass auf der Aussenseite der Rolle die Zinkfolie zu liegen kommt. Weiter zeigt die US 2,473,546 eine Batteriekonstruktion mit einem Gehäuse und mehreren in Serie geschalteten nebeneinander stehenden Zellen.

In der GB 1 144 438 wird ein wiederaufladbarer Akkumulator mit Elektrodenfolien offenbart, welche mit durchtränkten Membranen kombiniert sind. Der gewickelte Akkumulator umfasst homogene Membranen, die gemäss einer ersten Ausführungsform um einen isolierten Stangenkern gewickelt sind. Die Membranen weisen zwei korrespondierende Bleibeschichtungen auf. An der Aussenseite bleibt eine ununterbrochene Fläche von dieser Bleibeschichtung frei. Als Folge dieser Anordnung ist keine spezielle Zwischenschicht zwischen den unterschiedlich polarisierten Elektroden nötig. Bei der zweiten Ausführungsform ist der Membranstreifen beidseitig mit Blei überzogen. In seinem Zentrum sind zwei Polverbindungselemente in geringem Abstand zueinander angeordnet. Der Membranenstreifen umgibt diese mit dem Bleiüberzug gleicher Polung. Beide Streifenenden formen eine Doppelspirale.

### Darstellung der Erfindung

Aufgabe der Erfindung ist es, eine Batterie der eingangs genannten Art anzugeben, bei welcher die aktive Bandlänge von Kathode und Anode möglichst groß ist, ohne daß Probleme mit unerwünschten Ablagerungen der erwähnten Art entstehen.

Die Lösung der Aufgabe ist durch die Merkmale des Anspruchs 1 definiert. Gemäss der Erfindung ist der stiftförmige Ableiter anschließend an den Anschlußbereich mit mindestens einer Wicklung des Ableiterbandes unmittelbar umschlossen.

Auf diese Weise wird vermieden, dass ein Teil des Ableiterbandes ohne aktive Beschichtung gehalten werden muss. Mit anderen Worten: Die aktive Länge des Bandes kann maximiert werden. Gegenüber den bekannten Konstruktionen mit einer langen, um beide Ableiter herumgeführten, nicht aktiv beschichteten Bandfläche können insbesondere bei kleinen Batterien Verbesserungen der Kapazität um mindestens 10% erreicht werden. Dabei sind keine zusätzlichen Elemente (wie z.B. Trennfolien zwischen den Wicklungen) erforderlich, welche die Herstellung aufwendige machen würden.

Typischerweise ist im Wesentlichen das ganze Ableiterband mit einer aktiven Oberflächenbeschichtung versehen. Freigelassen sind nur die sogenannten Anschlussbereiche, in welchen das Ableiterband am Ableiter (für den Stromab- bzw. zufluss) angebracht ist. Es soll also eine flächenmäßig maximale Oberflächenbeschichtung für die Stromerzeugung zur Verfügung stehen.

Vorzugsweise ist der Anschlußbereich so klein wie möglich. Insbesondere soll er weniger als einen halben Umfangsbereich des Ableiters beanspruchen. Bei zylindrischen Ableitern erstreckt er sich z.B. nur gerade über einen Viertel (d.h. 90 ° bezogen auf die Längsachse des Ableiters).

Bei einer Batterie mit zwei beabstandeten, eigenständigen Ableitern werden zwei Ableiter bänder eingesetzt, die als Kathoden- und Anodenband ausgebildet sind. Entsprechend den bekannten Materialien können Aluminium-Bänder für die Kathode und Kupfer-Bänder für die Anode verwendet werden. Bei Batterien mit anderen chemischen Basisreaktionen können entsprechend andere Materialien zur Anwendung kommen.

Wie bei den bekannten können auch bei den erfindungsgemässen Wickel-Batterien mit Elektrolyt getränkte Separator-Bänder zwischen den Ableiterbändern aufgewickelt werden. Es ist mindestens ein durchgehendes Band erforderlich. Denkbar ist aber auch, daß z.B. je ein eigenständiges Separator-Band jedem Ableiter zugeordnet ist.

Gemäss einer besonders bevorzugten Ausführungsform hat der Ableiter die Form eines Röhrchens, in dessen Innerem ein sogenannt integrierter Stromanschluß-Steckkontakt ausgebildet ist. Zumindest ein Teil des Inneren des Röhrchens ist von aussen zugänglich und bildet den Hohlraum als Stromanschluss für ein Steckelement einer Halterung. Die Ableiter bilden also den weiblichen Teil einer Steckverbindung, so daß die Batterie auf einen geeignet ausgebildeten männlichen Teil aufgesetzt werden kann, wobei nicht nur der elektrische Kontakt hergestellt wird, sondern gleichzeitig das mechanische Halten der Batterie.

Gemäss einer besonders bevorzugten Ausführungsform ist die Batterie kasten- bzw. quaderförmig und weist genau zwei Wickelstäbe mit erfindungsgemässen Innensteckanschlüssen auf. Die Wickelstäbe sind in den Wendepunkten des flachen Wickels und haben einen Durchmesser von z.B. weniger als 2 mm (typischerweise etwa 1 mm). Anstelle von zwei Wickelstäben kann beispielsweise auch eine flache Wickelplatte vorgesehen sein, die zwei von ausserhalb des Batteriegehäuses zugängliche Hohlräume als Stromanschlüsse hat.

Weil bei dieser Ausführungsform die ohnehin erforderlichen Wickelträger gleichzeitig die Stromanschlüsse darstellen, sind die bei bekannten Batterien zusätzlich erforderlichen elektrischen Verbindungselemente zu aussen am Gehäuse angeordneten Anschlüssen hinfällig.

Es kann auch nur ein einziger integrierter Steckkontakt vorgesehen sein, während der zweite Stromanschluss ähnlich wie beim Stand der Technik durch eine Aussenfläche des Gehäuses gebildet wird.

Unter bestimmten Umständen kann es vorteilhaft sein, wenn sich der Hohlraum durch das Gehäuse hindurch erstreckt. Das heisst, er ist von zwei (gegenüberliegenden) Seiten zugänglich. Auf diese Weise wird es möglich, auf kleinstem Raum Batterien in Serie zu schalten oder Batterien als optionale Zwischenelemente zwischen einem Geräteanschluss und einer Stromzuführung einzusetzen.

Der Hohlraum braucht allerdings nicht durchgängig zu sein. Er kann z.B. irgendwo im Inneren eine Trennwand haben, die einen direkten mechanischen Kontakt zwischen einem von "unten" und einem von "oben" eingeführten Stecker vermeidet oder einen Anschlag für einen von aussen eingeführten Kontaktstift bildet.

Abhängig von der axialen Länge der Batterie wird sich der Hohlraum mindestens über einen Drittel, vorzugsweise über mehr als die Hälfte der genannten Länge erstrecken. Bei kleinen Batterien ist der Hohlraum relativ betrachtet grösser als bei grossen (Stabilität der Kontaktstifte).

Es gibt verschiedene Anordnungen für die Ableiter. Bei einer ersten bevorzugten Ausführungsform befinden sich die Ableiter im Zentrum des Wickels nahe nebeneinander. Die Batterie kann dann insgesamt eine mehr oder weniger zylindrische Form haben. Der Abstand der Ableiter ist zum Beispiel gerade so groß, daß die erfindungsgemässen Umschliessungswicklungen Platz haben. Der Abstand kann also unter 1 mm liegen.

Die genannte erste Ausführungsformen zeichnete sich dadurch aus, daß auch zwischen den Ableitern Bänder mit aktiver Oberflächenbeschichtung vorhanden sind. Es gibt also keinen speicherungstechnisch inaktiven Bereich zwischen den Ableitern. Der im Gehäuse vorhandene Raum ist optimal für die Stromerzeugung genutzt.

Bei einer zweiten bevorzugten Ausführungsform haben die Ableiter einen verhältnismäßig großen Abstand zueinander, so dass die Batterie insgesamt flach wird. Ein Abstand wird in diesem Zusammenhang als groß bezeichnet, wenn er größer als eine Dicke des Wickels ist. Zur optimalen Ausnutzung des Platzes wird das Gehäuse im Bereich zwischen den Ableitern derart geformt (bzw. flach gepreßt) dass im Zentrum des Wickels kein Freiraum vorhanden ist. Die beiden Hälften des Wickels liegen also im Zentrum aufeinander.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Querschnittsdarstellung einer Batterie gemäss Stand der Technik;
- Fig. 2a-d: eine schematische Darstellung der Schritte des erfindungsgemässen Herstellungsverfahrens;
- Fig. 3: eine schematische Darstellung einer Batterie mit eng beabstandeten Trägern;
- Fig. 4: eine schematische Darstellung einer kassettenförmigen Batterie;
- Fig. 5: eine schematische Darstellung einer asymmetrischen Ausführungsform.

Grundsätzlich sind in den Figuren gleiche Teile mit gleichen Bezugszeichen versehen.

### Wege zur Ausführung der Erfindung

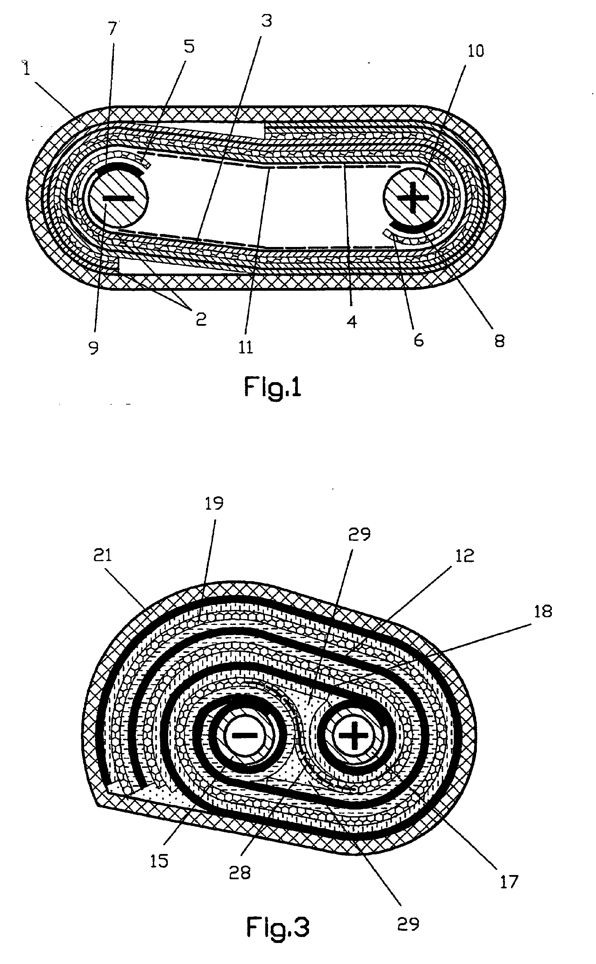

Um den Kern der Erfindung besser erkennbar zu machen, soll nachfolgend zuerst ein aus dem Stand der Technik bekannter Batterie-Aufbau anhand der Fig. 1 kurz erläutert werden.

In einem hermetisch dicht verschlossenen, z.B. rundlich/abgeflachten Gehäuse 1 ist ein Wickel 2 aus Anodenband 3, Kathodenband 4 und Separatorbändern 5, 6 untergebracht. (Die Separatorbänder 5, 6 sind wie üblich mit Elektrolyt getränkt.) Anodenband 3 und Kathodenband 4 sind beidseitig mit einer aktiven Beschichtung versehen und werden durch die Separatorbänder 5, 6 getrennt gehalten. Im Inneren des Wickels 2 sind zwei z.B. stiftförmige Träger 9, 10 vorgesehen. Das Anodenband 3 ist mit seinem Anschlußbereich 7 z.B. am ersten Träger 9 und das Kathodenband 4 mit seinem Anschlußbereich 8 am zweiten Träger 10 schweißtechnisch angepunktet. Der Batteriestrom kann somit über die beiden Träger 9, 10 abfließen.

Damit keine nicht mit aktivem Material beschichtete "nackte" Kupferoberfläche direkt gegenüber dem aktiven Anodenmaterial zu liegen kommt, weisen Anoden- und Kathodenband 3 bzw. 4 beschichtungsfreie Bereiche auf. Ein solcher ist in Fig. 1 beispielhaft mit dem Bezugszeichen 11 markiert. Es ist erkennbar, daß sich dieser Bereich 11 ausgehend vom Anschlußbereich 7 bzw. 8 bis um den anderen Träger 10 bzw. 9 herum erstrecken muß. Dies bedeutet namentlich bei kleinen Batterien einen nicht vernachlässigbaren Verlust an aktiver Oberfläche.

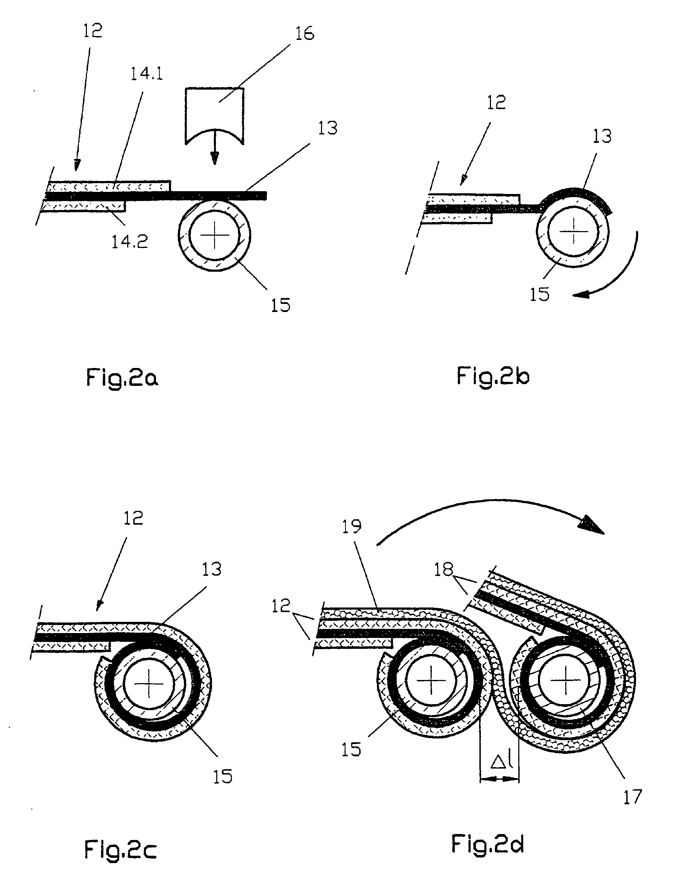

Anhand der Figuren 2a bis 2d soll die erfindungsgemäße Lösung erläutert werden. Das Kathodenband 12 ist mit Ausnahme eines kurzen Anschlußbereiches 13 beidseitig mit einer aktiven Beschichtung 14.1, 14.2 versehen. Die Länge des Anschlußbereiches 13 beträgt z.B. nur gerade etwa 1-3 mm. In den Figuren ist das Kathodenband 12 im Anschlußbereich 13 beidseitig unbeschichtet. Im Prinzip genügt es aber, wenn die aktive Beschichtung nur auf der inneren Seite fehlt, also dort, wo das Kathodenband 12 am Röhrchen 15 (Ableiter) angebracht wird.

Mit einem Werkzeug 16 wird nun der Anschlußbereich 13 elektrisch leitend mit einem Röhrchen 15 verbunden (Fig. 2a). Dieses Röhrchen 15 stellt den einen von zwei Trägern des Batterie-Wickels dar.

Danach wird das Röhrchen 15 gedreht (Fig. 2b), bis zumindest eine geschlossene Umwicklung durch das Kathodenband 12 vorhanden ist (Fig. 2c). Der nicht beschichtete Anschlußbereich 13 wird durch den anschließenden, beschichteten Teil des Kathodenbandes 12 überdeckt.

In gleicher Weise wird z.B. der Anfang eines Anodenbandes 18 auf ein zweites Röhrchen 17 aufgewickelt. Nun werden die beiden vorgewickelten Röhrchen 15, 17 nebeneinander im gewünschten (z.B. möglichst geringen) Abstand angeordnet. Zwischen Kathoden- und Anodenband 12 bzw. 18 wird zudem ein Separatorband 19 eingebracht. Im Beispiel gemäss Fig. 2d ist ein durchgehendes Separatorband 19 vorgesehen, d.h. die Stelle, welche sich zwischen den beiden Röhrchen 15 und 17 befindet, ist etwa in der Mitte des Separatorbandes 19.

Jetzt können die beiden Röhrchen 15, 17 umeinander herum gedreht werden, wodurch der Wickel 26 aus Kathodenband 12, Anodenband 18 und Separatorband 19 entsteht. Der restliche Teil der Batterie-Herstellung läuft in an sich bekannter Weise ab.

Fig. 3 zeigt die fertige Batterie. Gemäss einer besonders bevorzugten Ausführungsform der Erfindung sind die beiden Träger 15 und 17 in geringem gegenseitigen Abstand (von z.B. weniger als einem Durchmesser eines Trägers 15 bzw. 17) angeordnet. Im Bereich 20 zwischen den beiden Trägern 15 und 17 befindet sich Elektrolyt 29 . Das zwischen den beiden Trägern 15 und 17 hindurch laufende Separatorband 19 schafft einen (gestrichelt gezeichneten) zusätzlichen aktiven Bereich 28. Der Raum im Gehäuse 21 ist somit besser ausgenutzt als beim Stand der Technik (gemäss Fig. 1). Ferner wird durch die erfindungsgemäße "Vor-Umwicklung" der Träger 15 und 17 eine Hemmung der Selbstentladung erreicht.

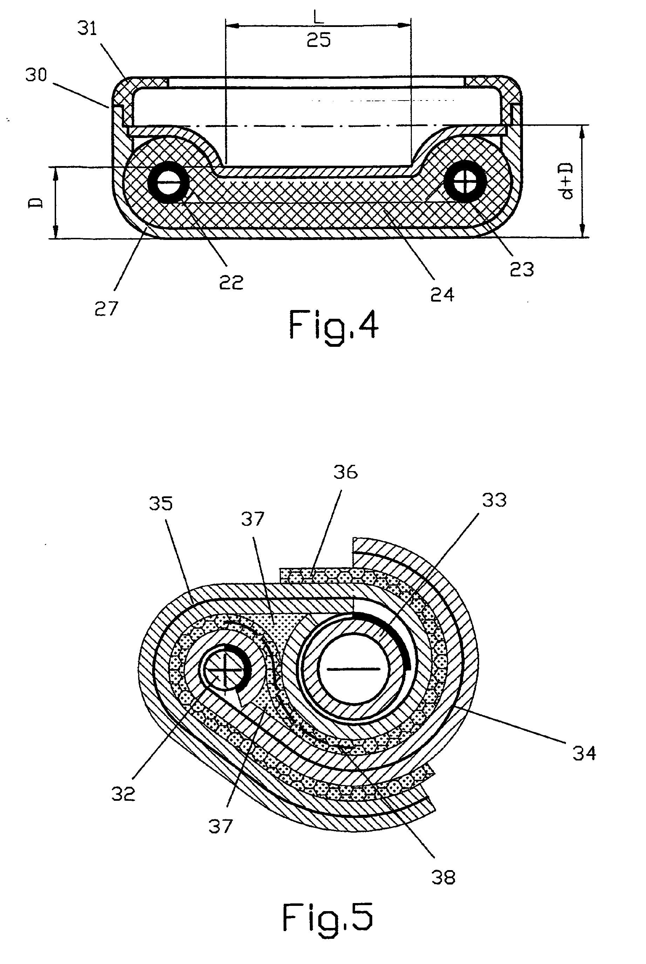

Fig. 4 zeigt eine weitere Ausführungsform, die sich durch eine besonders flache Bauweise auszeichnet. Die beiden Träger des Wickels 24 sind durch Röhrchen 22, 23 gebildet. Sie sind in einem großen gegenseitigen Abstand in einem flachen Gehäuse 27 untergebracht. Der Aufbau des Wickels 24 ist im Prinzip gleich wie anhand der Figuren 2a bis 2d erläutert. Jedes Röhrchen 22, 23 ist also zumindest einmal direkt mit dem jeweiligen Ableiterband umwickelt, bevor die gemeinsame Umwicklung beider Röhrchen 22, 23 erfolgt.

In einem Bereich 25 zwischen den beiden Röhrchen 22, 23 ist das Gehäuse 27 gemäss einer besonders bevorzugten Ausführungsform nach innen gedrückt. In diesem Bereich 25 ist die Dicke D der Batterie geringer als an den Enden bei den beiden Röhrchen 22 und 23 (wo durch das Gehäuse eine Art zylindrische Wulste gebildet werden). Im Bereich der Röhrchen 22, 23 ist das Gehäuse 27 typischerweise entsprechend dem Durchmesser d eines Röhrchens 22 bzw. 23 größer (nämlich d + D). Bei kleinen Batterien werden Röhrchen mit einem Durchmesser d < 2 mm verwendet. Auch der Wickel 24 ist entsprechend dünn. Die Länge des Bereiches 25 kann mehrere Millimeter bis mehr als ein Zentimeter betragen, je nach erforderlicher Kapazität der Batterie.

Wie aus Fig. 4 ersichtlich ist, ist das Gehäuse 21 im Bereich 25 nur einseitig eingedrückt. Die andere (gegenüberliegende) Seite verläuft ohne Einbuchtung. Ferner ist zu erkennen, daß die Gehäusewand im eingedrückten Bereich 25 sozusagen auf der geometrischen Verbindungsebene der Achsen der beiden Röhrchen 22, 23 liegt. Es wird also eine aussenseitige Vertiefung gebildet. Diese kann für andere Zwecke genutzt werden. Als Beispiel sei das Unterbringen einer Schaltung zur Steuerung der Stromversorgung genannt. Ist die Batterie wiederaufladbar, kann in der genannten Vertiefung die Steuerelektronik des Ladegerätes untergebracht werden. Wird die Erfindung im Zusammenhang mit miniaturisierten Geräten eingesetzt, können die genaue Form der Batterie und die Ausgestaltung des Gerätes bzw. der Batterie-Halterung entsprechend den jeweiligen Bedürfnissen aufeinander abgestimmt werden.

Im vorliegenden Beispiel ist das Gehäuse 27 mit einer Randkupplung 30 ausgestattet. An dieser kann z.B. ein Gehäuseteil 31 angekoppelt werden. Die Batterie kann also quasi den Gehäuseboden eines Gerätes bilden. Anstelle des Gehäuseteils 31 kann z.B. auch eine Schaltungsplatine an der Batterie angebracht werden.

Gemäss einer besonders bevorzugten Ausführungsform sind innenseitig der Röhrchen 22, 23 die Stromanschlüsse der Batterie vorgesehen. D.h. die Röhrchen sind an den Enden offen für entsprechend ausgebildete Kontaktstifte einer Halterung. Die Kontaktstifte dienen gleichzeitig zum mechanischen Festhalten der Batterie. Auf diese Weise kann ein besonders zuverlässiger elektrischer Kontakt sichergestellt werden. Ferner kann die Batterie-Halterung einfach und kostengünstig ausgeführt sein. Und insgesamt wird der Platz minimiert, welcher typischerweise für die Gesamtanordnung "Halterung + Batterie" benötigt wird.

Sowohl bei der Ausführungsform gemäss Fig. 3 als auch bei der "Kassetten"-Konstruktion gemäss Fig. 4 wird ein maximaler Umschlingungswinkel der Ableiterrohre mit aktiven Oberflächen und damit eine optimale Ausnützung der eingesetzten aktiven Bandlänge erreicht.

die in Fig. 5 gezeigte Ausführungsform unterscheidet sich von derjenigen gemäss Fig. 3 im wesentlichen dadurch, daß nur der eine der beiden Träger 32, 33 als Röhrchen ausgebildet ist. Der andere Träger 32 ist ein dünner, geschlossener Stift. Die Batterie kann daher in eine nahezu zylindrische Form gebracht werden. (Die übrigen, im Zusammenhang mit Fig. 3 bereits beschriebenen Teile der Batterie sind: Doppelseitig beschichtetes Kathodenband 34 und doppelseitig beschichtetes Anodenband 35, mit Elektrolyt 37 beschichtetes Separatorband 36, zusätzlich aktiver Bereich 38.)

Die beschriebenen Ausführungsbeispiele können in vielfältiger Weise abgewandelt werden. Es sind nicht nur minimale oder maximale sondern auch mittlere Abstände der Ableiter möglich. So kann z.B. der Abstand bei der Ausführungsform gemäss Fig. 3 derart vergrößert werden, daß zwischen den beiden Ableitern ein weiteres Röhrchen Platz hat, welches als Stromdurchführung ausgebildet ist. D.h. das genannte dritte Röhrchen steht nicht in elektrischem Kontakt mit den Polen der Batterie oder dem elektrochemisch aktiven Bereich, sondern stellt eine isolierte Durchführung für andere Zwecke dar (beispielsweise um zwei Komponenten, die durch die Batterie anordnungsmässig getrennt sind, elektrisch miteinander zu verbinden).

Die in Fig. 4 gezeigte Batterie kann z.B. in der Form an die Platzverhältnisse eines beliebigen Gerätes angepaßt werden. Anstatt den Bereich 25 flach auszubilden, kann er zylindrisch gekrümmt sein (entsprechend der zylindrischen Form des interessierenden Gerätes). Die Einbuchtung braucht nicht nur an einer Seite ausgebildet zu sein. Es können durchaus auch zwei symmetrische oder asymmetrische Einbuchtungen hergestellt werden.

Zusammenfassend sind folgende Vorteile der Erfindung festzuhalten:
- Die aktive Bandlänge kann bei gleichem Batterie-Volumen je nach Kleinheit der Batterie um mindestens 10% erhöht werden. Entsprechend erhöht sich auch die Kapazität der Batterie.
- Für Batterien kleinster Bauform können Anode-und Kathodenableiter in kleinstem Abstand von unter 0.5 mm angeordnet werden, wobei die sich direkt gegenüberliegenden aktiven Bandflächen zwischen den Ableitern genützt werden können.
- Die erfindungsgemäBe Wickelanordnung erlaubt auch eine Kassettenbauform mit reduzierter Bauhöhe im Innenbereich. Für tragbare Geräte wird zusätzlicher Platz für die Geräteelektronik geschaffen. Die Erfindung kann insbesondere im Bereich der Handies, Uhren, GPS-Empfänger, Taschenrechner und der mobilen und/oder miniaturisierten Medizintechnik verwendet werden.

## Patentansprüche

1. Batterie mit mindestens zwei stiftförmigen Ableiter (15, 17; 22, 23) im Inneren eines Wickels (24) und zwei an den jeweiligen Ableiter mit einem Anschlußbereich (13) angebrachten Ableiterbänder (12) mit jeweils einer aktiven Oberflächenbeschichtung (14.1, 14.2), welche als Kathoden- und Anodenbinder ausgebildet sind, **dadurch gekennzeichnet, daß** jeder Ableiter (15, 17; 22, 23) unmittelbar anschließend an den Anschlußbereich (13) mit einer Wicklung des entsprechenden Ableiterbandes (12) umschlossen ist.

2. Batterie nach Anspruch 1, **dadurch gekennzeichnet, daß** die aktive Oberflächenbeschichtung (14.1, 14.2) im Wesentlichen das ganze Ableiterband (12) mit Ausnahme des Anschlußbereiches (13) bedeckt.

3. Batterie nach einem der Ansprüche 1 oder 2, **dadurch gekennzeichnet, daß** der Anschlußbereich (13) weniger als einen halben Umfangsbereich des Ableiters abdeckt.

4. Batterie nach einem der Ansprüche 1 bis 3, **dadurch gekennzeichnet, daß** der Wickel (24, 26) zusätzlich mindestens einen mit Elektrolyt getränkten Separator (19) umfaßt.

5. Batterie nach einem der Ansprüche 1 bis 4, **dadurch gekennzeichnet, dass** die Ableiter als Röhrchen (22, 23) ausgebildet sind, in deren Inneren Stromanschlüsse ausgebildet sind.

6. Batterie nach einem der Ansprüche 1 bis 5, **dadurch gekennzeichnet, daß** die Ableiter (15, 17) im Zentrum des Wickels (26) nahe nebeneinander angeordnet sind, wobei zwischen den Ableitern (15, 17) nur einzelne Umwicklungen vorhanden sind.

7. Batterie nach einem der Ansprüche 1 bis 6, **dadurch gekennzeichnet, daß** zwischen den Ableitern (15, 17) mit aktiver Oberfläche versehene Ableiterbänder vorhanden sind.

8. Batterie nach einem der Ansprüche 1 bis 7, **dadurch gekennzeichnet, daß** die Ableiter (22, 23) um mehr als eine Dicke (D) des Wickels beabstandet sind und dass ein den Wickel aufnehmendes Gehäuse (27) in einem Bereich (25) zwischen den Ableitern (22, 23) eine geringere Dicke (D) als im Bereich der Ableiter (22, 23) hat.

9. Batterie nach Anspruch 8, **dadurch gekennzeichnet, dass** im genannten Bereich (25) die Hälften des Wickels im Zentrum geschlossen liegen.

## Claims

1. Battery comprising at least two pin-shaped outgoing conductors (15, 17; 22, 23) in the interior of a coil (24) and two outgoing conductor bands (12) applied to the respective outgoing conductor with a connection region (13) each of said outgoing conductor bands having an active surface coating (14.1, 14.2), which outgoing conductor bands are in the form of cathode and anode blinders, **characterized in that** each outgoing conductor (15, 17; 22, 23) is surrounded, directly adjacent to the connection region (13), by a winding of the corresponding outgoing conductor band (12).

2. Battery according to Claim 1, **characterized in that** the active surface coating (14.1, 14.2) substantially covers the entire outgoing conductor band (12) with the exception of the connection region (13).

3. Battery according to either of Claims 1 and 2, **characterized in that** the connection region (13) covers less than half a circumferential region of the outgoing conductor.

4. Battery according to one of Claims 1 to 3, **characterized in that** the coil (24, 26) additionally comprises at least one separator (19) impregnated with electrolyte.

5. Battery according to one of Claims 1 to 4, **characterized in that** the outgoing conductors are in the form of tubes (22, 23) with electrical connections formed in the interior thereof.

6. Battery according to one of Claims 1 to 5, **characterized in that** the outgoing conductors (15, 17) are arranged close next to one another in the centre of the coil (26), wherein only individual wrappings are provided between the outgoing conductors (15, 17).

7. Battery according to one of Claims 1 to 6, **characterized in that** outgoing conductor bands provided with an active surface are provided between the outgoing conductors (15, 17).

8. Battery according to one of Claims 1 to 7, **characterized in that** the outgoing conductors (22, 23) are spaced apart from one another by more than a thickness (D) of the coil, and **in that** a housing (27) accommodating the coil has a smaller thickness (D) in a region (25) between the outgoing conductors (22, 23) than in the region of the outgoing conductors (22, 23).

9. Battery according to Claim 8, **characterized in that** the halves of the coil are positioned in the mentioned region (25) so as to be closed in the centre.

## Revendications

1. Batterie comprenant au moins deux collecteurs (15, 17 ; 22, 23) en forme de goupille à l'intérieur d'un bobinage (24) et deux bandes collectrices (12) fixées par une région de raccordement (13) au collecteur respectif et comprenant respectivement un revêtement de surface actif (14.1, 14.2), lesquelles sont réalisées sous forme d'attaches de cathode et d'anode, **caractérisée en ce que** chaque collecteur (15, 17 ; 22, 23) est entouré par un enroulement de la bande collectrice (12) correspondante de manière immédiatement adjacente à la région de raccordement (13).

2. Batterie selon la revendication 1, **caractérisée en ce que** le revêtement de surface actif (14.1, 14.2) recouvre essentiellement la bande collectrice (12) toute entière à l'exception de la région de raccordement (13).

3. Batterie selon l'une des revendications 1 ou 2, **caractérisée en ce que** la région de raccordement (13) recouvre moins de la moitié de la région périphérique du collecteur.

4. Batterie selon l'une quelconque des revendications 1 à 3, **caractérisée en ce que** le bobinage (24, 26) comporte en outre au moins un séparateur (19) imprégné d'électrolyte.

5. Batterie selon l'une quelconque des revendications 1 à 4, **caractérisée en ce que** les collecteurs sont réalisés sous forme de petits tubes (22, 23) à l'intérieur desquels sont réalisées des connexions électriques.

6. Batterie selon l'une quelconque des revendications 1 à 5, **caractérisée en ce que** les collecteurs (15, 17) sont disposés de manière proche les uns des autres au centre du bobinage (26), seuls des enroulements individuels étant présents entre les collecteurs (15, 17).

7. Batterie selon l'une quelconque des revendications 1 à 6, **caractérisée en ce que** des bandes collectrices pourvues d'une surface active sont présentes entre les collecteurs (15, 17).

8. Batterie selon l'une quelconque des revendications 1 à 7, **caractérisée en ce que** les collecteurs (22, 23) sont espacés de plus d'une épaisseur (D) du bobinage, et **en ce qu'**un boîtier (27) recevant le bobinage a une plus petite épaisseur (D) dans une région (25) entre les collecteurs (22, 23) que dans la région des collecteurs (22, 23).

9. Batterie selon la revendication 8, **caractérisée en ce que**, dans ladite région (25), les moitiés du bobinage se situent de manière fermée au centre.
